# EUROPEAN PATENT SPECIFICATION

(11) **EP 4 102 334 B1**
(45) Date of publication and mention of the grant of the patent: **18.09.2024**
(21) Application number: 22177620.6
(22) Date of filing: 15.02.2019
(51) Int. Cl.: G05D 23/19, G05D 29/00, B60H 1/00

(54) **A COOLING ARRANGEMENT FOR A MOTOR VEHICLE**
DISPOSITIF DE REFRIDISSEMENT POUR VEHICULE A MOTEUR
DISPOSITIF DE REFROIDISSEMENT POUR VEHICULE A MOTEUR

(43) Date of publication of application: 14.12.2022
(62) Divisional of application: 19157432.6
(73) Proprietor: Arriver Software AB, 583 30 Linköping (SE)
(72) Inventor: EKSTRÖM, Håkan, 58330 Linköping (SE); SAVARINO, Stefano, 58330 Linköping (SE); AXELSSON, Håkan, 58330 Linköping (SE)
(74) Representative: Reddie & Grose LLP

(56) References cited:
- JP-A- 2003 326 961
- JP-A- 2009 126 465
- US-A1- 2010 080 399
- US-A1- 2016 119 509

## Description

The invention relates to a cooling arrangement for cooling an electronic device in the passenger compartment of a motor vehicle, comprising an impeller based electric fan for cooling the electronic device, and an electronic fan controller to control said electric fan.

For existing technology of heat transfer using a cooling device with an impeller-based fan, the noise level from the device may become unacceptable. The noise level from a cooling device with an impeller based fan situated close to a human ear may cause a noise level which is at a noticeable or disturbing level. The acceptable noise level generated from the device depends on the current noise level surrounding the device and the distance between the device and the human. In case of a very low noise level surrounding the device and a short distance between the device and the human the acceptable noise level generated from the device is very low. Acceptable noise level becomes particularly critical in the case of a high-performance camera mounted behind the windscreen of a motor vehicle, due to the relative short distance to the human ear of the driver.

JP2009126465 discusses a cooling system. Occupants getting in a cabin are detected using an in-vehicle camera, and the number of drive revolution of the cooling fan is controlled according to the detection result. Accordingly, when it is detected that the passenger is not remained in the cabin, the number of drive revolution of the cooling fan can be enhanced and control of the revolution of the cooling fan can be more suitably performed.

The problem underlying the present invention is to provide an effective cooling arrangement for cooling an electronic device in the passenger compartment of a motor vehicle without disturbing the driver, co-driver and/or another passenger.

The invention solves this object with the features of the independent claims.

According to the invention, the fan controller has access to noise information correlating with the noise level in the surrounding of the electric fan and/or to passenger presence information indicating the presence or absence of at least one passenger in the passenger compartment. The fan controller is adapted to control the electric fan on the basis of the noise information and/or the passenger presence information. In this manner, the fan can be operated at high or full speed if the surrounding noise level in the passenger compartment is so high that the noise generated by the fan is drowned and does not disturb the driver or another passenger. On the other hand, the fan can be operated at medium or low level in case the surrounding noise level in the passenger compartment is so low that the noise generated by the fan would disturb the driver or another passenger if operated at high or full speed.

Alternatively or in addition, the fan can be operated at high or full speed if the absence of the driver and/or co-driver and/or another passenger is determined in the vehicle compartment. In this case, no-one is disturbed by a noisy fan.

Preferably, the noise information to be used by the fan controller comprises information from a handsfree microphone of the motor vehicle. This is a simple but effective way of determining the surrounding noise level for the fan control. Also, a microphone for handsfree communication is provided in many modern motor vehicles anyway, in which case no additional parts are needed to perform the advantageous fan control.

Preferably, the noise information to be used by the fan controller comprises compartment airflow information from an air conditioning, air heating and/or air blowing system of the motor vehicle. If the compartment airflow is determined to be high, the corresponding noise drowns the noise generated by the fan, which consequently can be operated at high or full speed. On the other hand, if the compartment airflow is determined to be low, the fan should be operated at medium or low speed or even turned off, in order not to disturb anyone.

Preferably, the passenger presence information comprises information from a seat occupancy sensor. This is a simple but effective way of determining the presence or absence of a relevant passenger (driver and/or co-driver and/or other passenger) in the motor vehicle. Also, one or more seat occupancy sensors are provided in many modern motor vehicles anyway, in which case no additional parts are needed to perform the advantageous fan control.

The electronic device to be cooled is a camera for inspecting a vehicle environment, which is often installed behind the windscreen of the motor vehicle, due to the short distance to the driver's or co-driver's ear.

Preferably, the cooling arrangement comprises a temperature sensor arranged to sense a temperature of said electronic device, wherein the fan controller is adapted to control the electric fan on the basis of said measured temperature. In this manner, overheating of the electronic device can be prevented in a simple and reliable manner.

In preferred embodiments of the invention, the fan controller is adapted to take into account, in the control of the electric fan, one or more parameters from the group of engine on or off; vehicle standstill or moving; vehicle speed; one or more vehicle doors open or closed. The above mentioned parameters correlate to the surrounding noise level in some way or other, such that taking one or more of these parameters into account can further improve the fan control.

Preferably the fan control comprises a loop where the fan is operated until a measured temperature falls below a predetermined threshold. This form of temperature regulation is particularly simple and effective.

Is In preferred embodiments, the fan controller is adapted to determine one or more vehicle statuses from the group of abandoned vehicle; standstill with engine off; standstill with engine on; driving; and to perform the control of the fan depending on the determined vehicle status. The above mentioned vehicle statuses correlate to the surrounding noise level in some way or other, such that taking one or more of these vehicle statuses into account can further improve the fan control.

Preferably, in a "standstill with engine off", "standstill with engine on" and/or "driving" vehicle status, the fan is operated at different impeller speed levels depending on the determined compartment air flow relative to at least one predetermined flow threshold. In particular, the fan can be operated at higher impeller speed with increasing compartment air flow, drowning the noise from the fan.

After all, an important feature of the invention is that the noise level surrounding the cooling device, with a impeller based fan, is advantageously considered when regulating the fan and thereby the noise level the cooling device or fan generates. A method with one or more of the following steps is included in preferred embodiments of the invention: 1) The noise level surrounding the device can be directly monitored and measured. 2) The relevant measurable entities can be used to indirectly estimate the noise level surrounding the device are received by the device. 3) The noise level surrounding the device can indirectly estimated from the received measurable entities made available to the device in step 2. 4) The monitored and estimated noise level can be used as an input to an algorithm regulating the fan in the device. 5) The algorithm regulating the fan allows a noise level generated from the fan which is related to the surrounding noise levels received in step 3, but with a hysteresis to avoid false action from temporary noise peak in the surrounding noise levels. 6) Preferably it can be possible to adjust the hysteresis and the relation between surrounding noise level and allowed noise level generated from the fan, in order to find an acceptable noise level for a human in each specific use case.

In addition, the acceptable noise level for a human depends on the distance between the device generating the noise and the human. Therefore, preferred aspects of the invention include considerations whether the human is close to the device or whether the human is not within hearing distance of the device. As described above, this could be done by determining whether the human is inside the vehicle, where the device is located, or not. The acceptable noise level generated by the cooling device is much higher when there is no human within hearing distance of the device. This information can be used in addition to the noise level surrounding the device when regulating the fan in above step 5.The monitored and measured noise level in step 1 above could be done with a noise level sensor, and directly reported to the cooling device or fan controller. The estimated noise level in step 3 above could be derived from measurable entities such as whether the vehicle engine is on or off, the speed of the vehicle and/or the compartment air flow intensity from an air conditioning system inside the vehicle.

Whether a human is within hearing distance to the device or not can preferably be determined by identifying any human presence or absence in the seats of the vehicle, in particular by one or more seat occupancy sensors. Preferably, fan control takes into account whether the door of the vehicle is or has been opened since the unlock of the vehicle, or by any other means, to determine a human inside the vehicle.

Summarizing the above, noise level estimation and/or measurement is performed in a preferred embodiment of the invention. Consideration of human presence or absence is an alternative embodiment. In a further embodiment, noise level estimation and/or measurement and human presence or absence determination are combined.

Advantages of the invention compared to a known solution (regulating the fan without knowledge of noise level nor human presence/absence in the vehicle) is that the noise level the cooling device generates is perceived as much lower with the invention. In an ideal realization of the invention the noise level generated from the cooling device with the impeller-based fan is never recognized by a human.

In the following the invention shall be illustrated on the basis of preferred embodiments with reference to the accompanying drawings, wherein:
- Fig. 1: shows a schematic view of a cooling arrangement for a motor vehicle;
- Fig. 2: shows a flow diagram of a system startup and/or shut-down sequence for an "abandoned vehicle" status; and
- Fig. 3: shows a flow diagram of a control method for a "standstill with engine off", "standstill with engine on" and/or driving" vehicle status.

The cooling arrangement 10 comprises a camera unit 23 adapted to be mounted behind a windscreen 21 of a motor vehicle, i.e. in the passenger compartment 24 of the motor vehicle 1. The camera unit 23 comprises a housing 25 adapted to be mounted behind a windscreen 21 of a motor vehicle, and at least one camera 12 arranged to view through a front opening of the housing 25 and through the windscreen 21 into the surrounding in front of the motor vehicle. Images captured by the camera 12 are processed by a digital processing device in an electronic control unit (ECU) 26 in order to detect obstacles in front of the motor vehicle, and to control a driver assistance device, like a collision avoidance system, depending on said image processing.

An impeller based fan 13 is provided in the camera unit 23, i.e. within the housing 25, in order to cool the camera 12 and to avoid overheating. The housing 25 preferably comprises openings 27, 28, in particular an inlet opening 27 for letting in cool air from the passenger compartment 24 into the camera unit 23 and an outlet opening 28 for letting out warm air from inside the camera unit 23 into the passenger compartment 24.

The fan speed of the fan 13 is controlled and/or regulated by a digital fan controller 15 depending on one or more measured values or parameters like noise level in the passenger compartment 24, presence or absence 22 of passengers in the passenger compartment 24, camera temperature, etc., which will be explained below in detail The fan controller 15 may be coral° prised in the same ECU 26 as the digital processor processing images from the camera 12, or in a separate ECU, or a processing device provided in the camera unit 23.

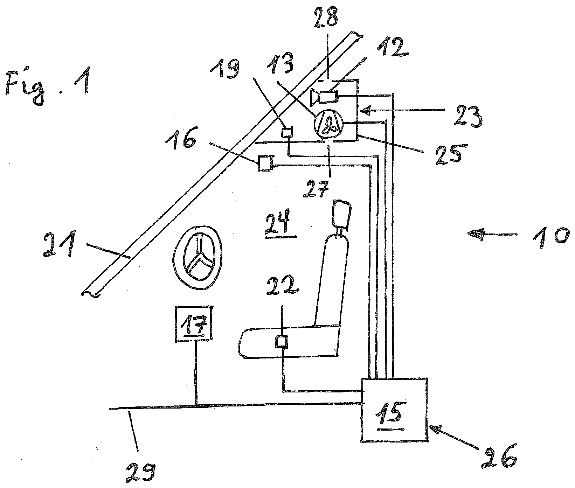

The fan speed of the fan 13 is preferably controlled and/or regulated by the fan controller 15 on the basis of a temperature of the camera 12, or more generally a temperature related to the camera 12 or a temperature within the camera unit 23, as measured by a temperature sensor 16 arranged inside the camera unit 23. In some embodiments, the temperature sensor 16 may be arranged inside the camera (unlike shown in Figure 1). For example, the temperature sensor 16 may be arranged to measure the PCB temperature, i.e. the temperature of a printed circuit board in the camera 12.

In particular, one or more pre-defined temperature thresholds may preferably stored in the fan controller 15, where the fan speed may be increased if the measured temperature (the temperature measured by the temperature sensor 16) exceeds a predefined threshold (depending also on other conditions, as will be explained below). Furthermore, one or more pre-defined temperature thresholds may preferably stored in the fan controller 15, where the fan speed may be decreased if the measured temperature (the temperature measured by the temperature sensor 16) falls below one of these pre-defined thresholds (depending also on other conditions).

According to one aspect of the invention, the fan speed of the fan 13 is preferably controlled and/or regulated by the fan controller 15 on the basis of information correlating with the noise level in the passenger compartment 24. The noise level in the passenger compartment 24 may preferably be measured by a microphone 16. In such case, the signal by the microphone 16 provides information correlating with the noise level in the passenger compartment 24. The microphone 16 may be a microphone of a handsfree communication system known per se in the art. Alternatively, the microphone 16 may be a separate microphone, in particular a dedicated microphone of the cooling arrangement 10.

Alternative and/or additional sources may be used for obtaining information correlating with the noise level in the passenger compartment 24. For example, information from an air conditioner 17, or air heater or air blower, for blowing air, in particular heated or cooled air into the passenger compartment 24, may be transmitted to the fan controller 15 via, for example, a data bus 29 (like CAN bus) of the motor vehicle. This may in particular comprise information whether the blower of the air conditioner 17 is on or off, and/or the speed or adjusted level of the blower of the air conditioner 17. This is because the blower of the air conditioner 17, when in operation, causes noise in the passenger compartment 24.

Other parameters used by the fan controller 15 for fan control can comprise the vehicle speed, where the noise level in the passenger compartment 24 usually increases with increasing vehicle speed; the status of the vehicle (standing or moving);the status of the vehicle engine (on or off); the status of the passenger doors of the vehicle (open or closed). These parameters may be transmitted to the fan controller via the data bus 29.

According to one aspect of the invention, the fan speed of the fan 13 is preferably controlled and/or regulated by the fan controller 15 on the basis of the presence or absence of at least one passenger, for example the driver, in the passenger compartment 24. The presence or absence of the driver, or any other passenger, in the passenger compartment 24 is preferably determined on the basis of a signal from a seat occupancy sensor 22. In addition or alternatively, the presence or absence of a passenger in the passenger compartment 24 may be determined by other means, for example a driver monitoring camera and/or a motion sensor adapted to detect motion of a person in the passenger compartment 24.

In general, if no passenger presence is determined in the passenger compartment 24, or if the absence of the driver and/or co-driver is determined, the fan speed, i.e. the rotation speed of the fan 13, can be controlled or regulated independently of the noise level in the passenger compartment 24. For example, the fan speed, i.e. the rotation speed of the fan 25 13, can be set to maximum by the fan controller 15 if the measured temperature is above a predetermined threshold, because in this case, no passenger in the passenger compartment 24 is disturbed by the noise generated by the rotating fan 13.

On the other hand, if the presence of one or more passengers, for example the driver and/or co-driver, is determined in the passenger compartment 24, the fan speed is advantageously controlled or regulated depending on the noise level in the passenger compartment 24, as determined for example by the microphone 16. For example, if the presence of the driver and/or the co-driver in the passenger compartment 24 is determined, for example on the basis of the seat occupancy sensor 22, the speed of fan 13 is advantageously kept low if low noise level is determined in the passenger compartment 24, and can be raised in the case a higher noise level is determined in the passenger compartment 24. In general, the fan speed may be set to several discrete levels related to corresponding noise and/or temperature thresholds, or the fan speed may be a continuous or quasi-continuous monotonic function of the noise level in the passenger compartment 24 and/or the temperature level of the camera 12.

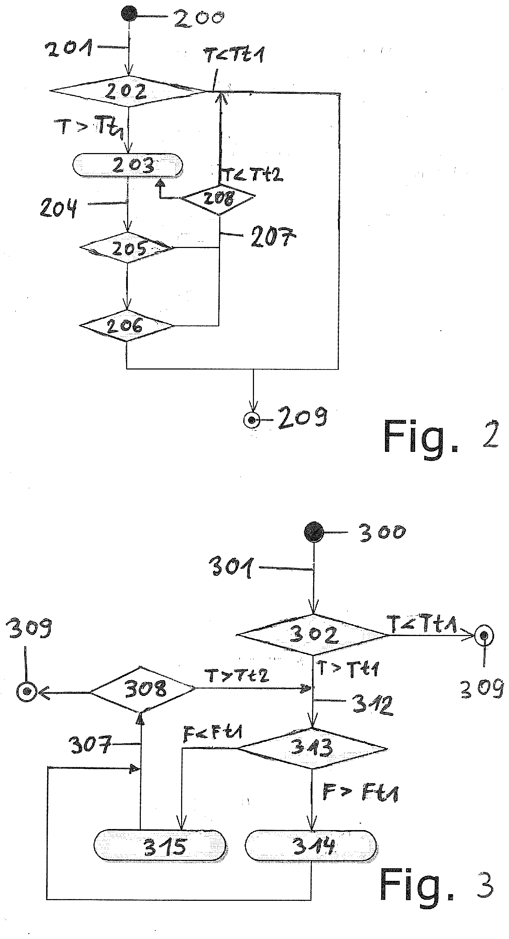

Details of the fan control of the electric fan 13 depending on the temperature of the camera 12, the presence or absence of one or more passengers in the passenger compartment 24, the noise level in the passenger compartment 24 and/or other parameters will be described in the following with reference to Figures 2 and 3.

With respect to the embodiment of Figures 2 and 3, the fan controller 15 is preferably adapted to determine different vehicle statuses with respect to Other parameters used by the 25 fan controller 15 for fan control the status of the vehicle (standing or moving), the status of the vehicle engine (on or off) and the status of the passenger doors of the vehicle (open or closed).

Figure 2 relates to a vehicle status denoted as "abandoned vehicle". In this status, the engine is off, the driver and/or co-driver, or all passengers, have left the vehicle and all passenger doors are closed, possibly locked. This state also covers situations where the vehicle prepares to be entered, or has just been left (vehicle bus on, camera started or still running).

Starting from a situation 200 where the fan 13 is off, the temperature of the camera 12, for example the PCB temperature, as measured by temperature sensor 19 is checked in step 201. In step 202, the measured temperature T is compared to a predefined threshold Ttl permanently stored for example in the io fan controller 15. If the measured temperature T is above the threshold Ttl, the fan controller 15 controls the fan 13 to run at full speed in step 203, in order to cool the camera 12, which does not disturb anyone because no passenger is in the vehicle.

During the fan 13 running at full speed, the vehicle door status may be checked by the fan controller 15 in step 204. In case all vehicle doors are closed, the fan controller 15 continues to step 207 which will be explained later.

If a vehicle door (one or more of the driver door, the co-driver door and/or any other passenger door) is open, the presence of at least one passenger (one or more of the driver, the co-driver and/or another passenger) is determined in step 206, for example on the basis of a signal from one or more seat occupancy sensor 22. If the passenger presence detection is negative, the fan controller 15 continues to step 207 which will be explained later. If, however, the passenger presence detection is positive, the fan 13 is controlled in step 209 such that the noise caused by the fan 13 does not exceed an acceptable noise level, and preferably does not cause noticeable noise, in step 209. In particular, the fan 13 may be shut off in step 209. Alternatively, the fan 13 may continue to operate at low or medium speed, i.e. at well below maximum speed, preferably below 50% maximum speed. In this manner, it can be ensured that the passenger which has entered the car is not disturbed by noise caused by the fan 13.

If either the door open status has been determined negative in step 205, or the passenger presence status in the passenger compartment has been determined negative in step 206, the temperature as measured by temperature sensor 19 is again checked in step 207, and the thus measured temperature T is compared to a predefined threshold Tt2 permanently stored for example in the fan controller 15 in step 208. The threshold temperature Tt2 may be equal to the temperature Ttl, but is preferably at least several °C below the temperature Ttl in order to introduce a hysteresis.

If the measured temperature T is above the threshold Tt2, the fan 13 continues to run at full speed (step 203), in order to further cool the camera 12. This loop continues until the current measured temperature T falls below the threshold T2 (provided door status and seat occupancy status remain unchanged) and further cooling of the camera 12 is not necessary, at least not at full fan speed. In this case, operation can proceed to step 209, in particular the fan 13 may be shut off in step 209.

In the above-described cooling loop, the step 205 of checking the vehicle door status is optional.

It should be noted that, when the vehicle is abandoned, the activity shown in Figure 2 shall only be run until the vision system and/or cooling arrangement is shut down, to save the vehicle battery from being exhausted. The vision system and/or cooling arrangement is powered up and/or shut down by the start key and/or by a corresponding signal on the vehicle bus, e.g. triggered by when the driver approaches the car.

Figure 3 relates to a vehicle status denoted as "standstill with engine off". In this status, the vehicle engine is off and the vehicle is standing still. The presence of at least one passenger, like the driver and/or co-driver is determined, for example on the basis of a signal from one or more seat occupancy sensors 22. This state also covers situations where the vehicle has just been entered, or the engine has just been turned off (camera started, driver seated).

The vehicle status changes from "abandoned vehicle" to "standstill with engine off", and vice versa, by the driver and/or c-driver, and/or another passenger, entering or leaving the vehicle, respectively, as determined for example by a seat occupation sensor 22.

In Figure 3, corresponding reference numbers are by 100 higher than those of Figure 2.

Starting from a situation 300 where the fan 13 is off, the temperature of the camera 12, for example the PCB temperature, as measured by temperature sensor 19 is checked in step 301. In step 302, the measured temperature T is compared to a predefined threshold Ttl permanently stored for example in the fan controller 15. The threshold temperature Ttl may be the same as, or different from, the threshold temperature Ttl of Figure 2. If the measured temperature T is below the threshold Ttl, the fan 13 is shut off in step 209 because there is no need for cooling the camera 12.

If the measured temperature T is above the threshold Ttl, the compartment airflow F is determined in step 312. The compartment airflow is the airflow generated by the blower of air conditioner 17 or any other air heating or air blowing device in the motor vehicle, and may for example adjustable by the driver, or automatically regulated. In step 313, the magnitude of the compartment airflow F is evaluated. For example, the compartment airflow may be evaluated as being ON or OFF. More generally, the compartment airflow F may be evaluated as being greater than or equal (≥) or below (<) a predetermined blowing level Ftl.

In case the current compartment airflow F is ON, or greater than or equal (≥) the predetermined blowing level Ftl, the fan controller 15 controls the fan 13 to blow at a medium speed in step 314, which provides cooling to the camera 12 but does not cause noticeable or disturbing noise for the driver and/or co-driver, because the noise from the blower of the air conditioner 17 predominates.

In case the current compartment airflow F is OFF, or below (<) the predetermined blowing level Ftl, the fan controller 15 controls the fan 13 to blow at a low speed in step 313 (where low speed < medium speed < full speed), which still provides cooling to the camera 12 but does not cause noticeable or disturbing noise for the driver and/or co-driver, even though there is no or little noise from the blower of the air conditioner 17.

The example of Figure 3 may be readily generalized to more than two speed levels of the fan 13 corresponding to more that one levels of current compartment airflow F.

Proceeding from the operation of the fan 13 in steps 314, 315, ..., the current temperature as measured by temperature sensor 19 is again checked in step 307, and the thus measured temperature T is compared to a predefined threshold Tt2 permanently stored for example in the fan controller 15 in step 308. The threshold temperature Tt2 may be equal to the temperature Ttl, but is preferably at least several °C below the temperature Ttl in order to introduce a hysteresis. Furthermore, the threshold temperature Tt2 may be the same as, or different io from, the threshold temperature Tt2 of Figure 2.

If the measured current temperature T is above the threshold Tt2, operation proceeds to step 313 and further to any one of steps 314, 315, ... in order to further cool the camera 12. This loop continues until the current measured temperature T falls below the threshold T2 and further cooling of the camera 12 is not necessary. In this case, operation proceeds from step 308 to step 309, where in particular the fan 13 may be shut off.

The fan controller 15 is preferably adapted to determine a vehicle status denoted as "standstill with engine on". This status differs from the status "standstill with engine off" in that the vehicle engine is running, but the vehicle is standing still, i.e., the vehicle speed is still zero. The vehicle status changes from "standstill with engine off" to "standstill with engine on", and vice versa, by turning on or off the vehicle engine, respectively. Both the engine speed and the vehicle speed can be available to the fan controller 15 via the vehicle data bus 29.

The control of the fan 13 by the fan controller 15 in the status "standstill with engine on" can be essentially the same as that in Figure 3. However, the speed level of the fan operation in step 314 and/or in step 315 can be different from, in particular be higher than, the corresponding speed level(s) in the "standstill with engine off" status. In particular, the speed level of the fan operation in step 314 and/or in step 315 can depend on the engine status (on/off) and/or on the engine speed. More specifically, the speed level of the fan operation in step 314 and/or in step 315 can increase with higher engine speed, and/or decrease with lower engine speed. The temperature thresholds Ttl and/or T2 can be the same as in Figure 3, or different if appropriate.

The fan controller 15 is preferably adapted to determine a vehicle status denoted as "driving". This status differs from the status "standstill with engine on" in that the vehicle speed is larger than zero. The vehicle status changes from "standstill with engine on" to "driving", and vice versa, by the vehicle staring to move or halting, respectively. The vehicle speed can be available to the fan controller 15 via the vehicle data bus 29.

The control of the fan 13 by the fan controller 15 in the status "driving" can be essentially the same as that for the status "Standstill with engine on". However, the speed level of the fan operation in step 314 and/or in step 315 can be different from, in particular be higher than, the corresponding rotation level(s) in the "standstill with engine on" status. In particular, the speed level of the fan operation in step 314 and/or in step 315 can depend on the vehicle speed. More specifically, the speed level of the fan operation in step 314 and/or in step 315 can increase with higher vehicle speed and/or decrease with lower vehicle speed. The temperature thresholds Ttl and/or T2 can be the same as in Figure 3, or different if appropriate.

## Claims

1. A cooling arrangement (10) for cooling an electronic device (12) in the passenger compartment of a motor vehicle (1), comprising an impeller based electric fan (13) for cooling the electronic device (12), and an electronic fan controller (15) adapted to use an algorithm to control said electric fan (15), wherein said electronic device (12) is a camera for inspecting a vehicle environment, and wherein said fan controller (15) has access to noise information correlating with the noise level in the surrounding of the electric fan (13) and passenger presence information indicating the presence or absence of at least one passenger in the passenger compartment, wherein said noise information comprises information from a handsfree microphone (16) of the motor vehicle and said passenger presence information comprises information from a seat occupancy sensor (22), wherein said fan controller (15) is adapted to control said electric fan (13) on the basis of said noise information and said passenger presence information, wherein the fan controller (15) uses said noise information as an input to the algorithm, and whereby if no passenger presence is determined in the passenger compartment (24), or if the absence of the driver and/or co-driver is determined, the fan speed is controlled independently of the noise level in the passenger compartment (24),
the cooling arrangement being **characterised in that**:
the algorithm allows a noise level generated from the electric fan related to the noise level in the surrounding of the electric fan with a hysteresis.

2. The cooling arrangement as in any one of the preceding claim, **characterized in that** said noise information comprises compartment airflow information from an air conditioning, air heating and/or air blowing system (18) of the motor vehicle.

3. The cooling arrangement as in any one of the preceding claims, **characterized in that** said cooling arrangement comprises a housing (20), wherein said electronic fan (13) and said electronic device (12) are arranged in said housing (20).

4. The cooling arrangement as in claim 3, **characterized in that** said housing (20) is arranged for being mounted behind the windscreen (21) of a motor vehicle.

5. The cooling arrangement as in any one of the preceding claims, **characterized in that** it comprises a temperature sensor (19) arranged to sense a temperature of said electronic device (12), wherein said fan controller (15) is adapted to control said electric fan (13) on the basis of said measured temperature.

6. The cooling arrangement as in any one of the preceding
claims, **characterized in that** said fan controller (15) is adapted to take into account, in said control of said electric fan (13), one or more parameters from the group of:
- engine on or off;
- vehicle standstill or moving;
- vehicle speed;
- one or more vehicle doors open or closed.

7. The cooling arrangement as in any one of the preceding claims, **characterized in that** the fan control comprises
a loop (202-208; 307, 308, 312-315) where the fan (15) is operated until a measured temperature T falls below a predetermined threshold Tt2.

8. The cooling arrangement as in any one of the preceding claims, **characterized in that** said fan controller (15) is adapted to determine one or more vehicle statuses from the group of:
- abandoned vehicle;
- standstill with engine off;
- standstill with engine on;
- driving
and to perform the control of the fan (13) depending on the determined vehicle status.

9. The cooling arrangement as in claim 8, wherein in a "standstill with engine off", "standstill with engine on" and/or "driving" vehicle status, the fan (15) is operated at different impeller speed levels (314, 315) depending on the determined compartment air flow F relative to at least one predetermined flow threshold Ftl.

10. The cooling arrangement as in claim 9, wherein the fan (15) is operated at higher impeller speed (314) with increasing compartment air flow F.

## Patentansprüche

1. Kühlanordnung (10) zum Kühlen eines elektronischen Geräts (12) im Fahrgastraum eines Kraftfahrzeugs (1), die ein elektrisches Gebläse (13) auf Flügelradbasis zum Kühlen des elektronischen Geräts (12) und einen zur Anwendung eines Algorithmus zur Steuerung des genannten elektrischen Gebläses (15) ausgelegten Elektronisches-Gebläse-Controller (15) umfasst, wobei das genannte elektronische Gerät (12) eine Kamera zur Inspektion einer Fahrzeugumgebung ist, und wobei der genannte Gebläse-Controller (15) Zugang zu Geräuschinformationen in Bezug auf den Geräuschpegel in der Umgebung des elektrischen Gebläses (13) und zu Fahrgastanwesenheitsinformationen hat, die die An- oder Abwesenheit von mindestens einem Fahrgast im Fahrgastraum angeben, wobei die genannten Geräuschinformationen Informationen von einem Freisprechmikrofon (16) des Kraftfahrzeugs umfassen und die genannten Fahrgastanwesenheitsinformationen Informationen von einem Sitzbelegungssensor (22) umfassen, wobei der genannte Gebläse-Controller (15) zum Steuern des genannten elektrischen Gebläses (13) auf der Basis der genannten Geräuschinformationen und der genannten Fahrgastanwesenheitsinformationen ausgelegt ist, wobei der Gebläse-Controller (15) die genannten Geräuschinformation als Eingabe für den Algorithmus verwendet,
und wobei, wenn keine Fahrgastanwesenheit im Fahrgastraum (24) festgestellt wird oder wenn die Abwesenheit des Fahrers und/oder Beifahrers festgestellt wird, die Gebläsedrehzahl unabhängig vom Geräuschpegel im Fahrgastraum (24) geregelt wird, wobei die Kühlanordnung **dadurch gekennzeichnet ist, dass**:
der Algorithmus einen vom elektrischen Gebläse erzeugten Geräuschpegel in Bezug auf den Geräuschpegel in der Umgebung des elektrischen Gebläses mit einer Hysterese zulässt.

2. Kühlanordnung nach dem vorherigen Anspruch, **dadurch gekennzeichnet, dass** die genannten Geräuschinformationen Fahrgastraum-Luftstrominformationen von einer Klimaanlage, einer Luftheizung und/oder einem Luftgebläsesystem (18) des Kraftfahrzeugs umfassen.

3. Kühlanordnung nach einem der vorherigen Ansprüche, **dadurch gekennzeichnet, dass** die genannte Kühlanordnung ein Gehäuse (20) umfasst, wobei das genannte elektronische Gebläse (13) und das genannte elektronische Gerät (12) in dem genannten Gehäuse (20) angeordnet sind.

4. Kühlanordnung nach Anspruch 3, **dadurch gekennzeichnet, dass** das genannte Gehäuse (20) zur Montage hinter der Windschutzscheibe (21) eines Kraftfahrzeugs ausgelegt ist.

5. Kühlanordnung nach einem der vorherigen Ansprüche, **dadurch gekennzeichnet, dass** sie einen Temperatursensor (19) zum Erfassen einer Temperatur des genannten elektronischen Geräts (12) umfasst, wobei der genannte Gebläse-Controller (15) zum Steuern des genannten elektrischen Gebläses (13) auf der Basis der genannten gemessenen Temperatur ausgelegt ist.

6. Kühlanordnung nach einem der vorherigen Ansprüche, **dadurch gekennzeichnet, dass** der genannte Gebläse-Controller (15) ausgelegt ist zum Berücksichtigen, bei dem genannten Steuern des genannten elektrischen Gebläses (13), eines oder mehrerer Parameter aus der folgenden Gruppe:
- Motor ein oder aus;
- Fahrzeug steht oder fährt;
- Fahrzeuggeschwindigkeit;
- eine oder mehrere Fahrzeugtüren offen oder geschlossen.

7. Kühlanordnung nach einem der vorherigen Ansprüche, **dadurch gekennzeichnet, dass** der Gebläse-Controller eine Schleife (202-208; 307, 308, 312-315) umfasst, in der das Gebläse (15) betrieben wird, bis eine gemessene Temperatur T unter einen vorgegebenen Schwellenwert Tt2 abfällt.

8. Kühlanordnung nach einem der vorherigen Ansprüche, **dadurch gekennzeichnet, dass** der genannte Gebläse-Controller (15) ausgelegt ist zum Bestimmen eines oder mehrerer Fahrzeugzustände aus der Gruppe:
- verlassenes Fahrzeug;
- Stillstand mit ausgeschaltetem Motor;
- Stillstand mit eingeschaltetem Motor;
- Fahren
und zum Durchführen der Steuerung des Gebläses (13) in Abhängigkeit von dem bestimmten Fahrzeugzustand.

9. Kühlanordnung nach Anspruch 8, wobei das Gebläse (15) in den Fahrzeugzuständen "Stillstand mit ausgeschaltetem Motor", "Stillstand mit eingeschaltetem Motor" und/oder "Fahren" je nach dem bestimmten Fahrgastraumluftstrom F relativ zu mindestens einem vorbestimmten Strömungsschwellenwert Ftl mit unterschiedlichen Flügelraddrehzahlen (314, 315) betrieben wird.

10. Kühlanordnung nach Anspruch 9, wobei das Gebläse (15) mit zunehmender Fahrgastraumluftströmung F mit höherer Flügelraddrehzahl (314) betrieben wird.

## Revendications

1. Dispositif de refroidissement (10) pour refroidir un dispositif électronique (12) dans l'habitacle d'un véhicule automobile (1), comprenant un ventilateur électrique (13) à roue pour refroidir le dispositif électronique (12) et un contrôleur de ventilateur électronique (15) conçu pour utiliser un algorithme pour commander ledit ventilateur électrique (15), dans lequel ledit dispositif électronique (12) est une caméra destinée à inspecter un environnement de véhicule, et dans lequel ledit contrôleur de ventilateur (15) a accès à des informations de bruit corrélées avec le niveau de bruit dans l'environnement du ventilateur électrique (13) et à des informations de présence de passager indiquant la présence ou l'absence d'au moins un passager dans l'habitacle, dans lequel lesdites informations de bruit comprennent des informations provenant d'un microphone mains libres (16) du véhicule automobile et lesdites informations de présence de passager comprennent des informations provenant d'un capteur d'occupation de siège (22) ; dans lequel ledit contrôleur de ventilateur (15) est conçu pour commander ledit ventilateur électrique (13) en fonction desdites informations de bruit et desdites informations de présence de passager, dans lequel le contrôleur de ventilateur (15) utilise lesdites informations de bruit comme entrée de l'algorithme,
et moyennant quoi
si aucune présence de passager n'est déterminée dans l'habitacle (24) , ou si l'absence du conducteur et/ou du copilote est déterminée, la vitesse du ventilateur est commandée indépendamment du niveau de bruit dans l'habitacle (24) ;
l'agencement de refroidissement étant **caractérisé en ce que** :
l'algorithme permet un niveau de bruit généré par le ventilateur électrique lié au niveau de bruit dans l'environnement du ventilateur électrique avec une hystérésis.

2. Dispositif de refroidissement selon l'une quelconque des revendications précédentes, **caractérisé en ce que** lesdites informations de bruit comprennent des informations de débit d'air d'habitacle provenant d'un système de climatisation, de chauffage de l'air et/ou de soufflage d'air (18) du véhicule automobile.

3. Dispositif de refroidissement selon l'une quelconque des revendications précédentes, **caractérisé en ce que** ledit dispositif de refroidissement comprend un boîtier (20), dans lequel ledit ventilateur électronique (13) et ledit dispositif électronique (12) sont disposés dans ledit boîtier (20)

4. Dispositif de refroidissement selon la revendication 3, **caractérisé en ce que** ledit boîtier (20) est agencé pour être monté derrière le pare-brise (21) d'un véhicule automobile.

5. Dispositif de refroidissement selon l'une quelconque des revendications précédentes, **caractérisé en ce qu'**il comprend un capteur de température (19) agencé pour détecter une température dudit dispositif électronique (12), dans lequel ledit contrôleur de ventilateur (15) est conçu pour commander ledit ventilateur électrique (13)en fonction de ladite température mesurée.

6. Dispositif de refroidissement selon l'une quelconque des revendications précédentes, **caractérisé en ce que** ledit contrôleur de ventilateur (15) est conçu pour prendre en compte, dans ladite commande dudit ventilateur électrique (13), un ou plusieurs paramètres du groupe suivant :
- moteur allumé ou éteint ;
- véhicule à l'arrêt ou en mouvement ;
- vitesse du véhicule ;
- une ou plusieurs portes de véhicule ouvertes ou fermées.

7. Dispositif de refroidissement selon l'une quelconque des revendications précédentes, **caractérisé en ce que** la commande du ventilateur comporte une boucle (202-208 ; 307, 308, 312-315) suivant laquelle le ventilateur (15) est actionné jusqu'à ce qu'une température mesurée T tombe au-dessous d'un seuil prédéterminé Tt2 .

8. Dispositif de refroidissement selon l'une quelconque des revendications précédentes, **caractérisé en ce que** ledit contrôleur de ventilateur (15) est conçu pour déterminer un ou plusieurs états de véhicule à partir du groupe suivant :
- véhicule abandonné ;
- à l'arrêt moteur éteint ;
- à l'arrêt moteur allumé ;
- conduite
et pour réaliser la commande du ventilateur (13) en fonction de l'état de véhicule déterminé.

9. Dispositif de refroidissement selon la revendication 8, dans lequel dans un état "à l'arrêt moteur éteint", "à l'arrêt moteur allumé" et/ou " conduite" du véhicule, le ventilateur (15) est actionné à différents niveaux de vitesse de roue (314, 315) en fonction du débit d'air d'habitacle F déterminé par rapport à au moins un seuil de débit prédéterminé Ft1.

10. Dispositif de refroidissement selon la revendication 9, dans lequel le ventilateur (15) est actionné à une vitesse d'hélice de roue 314) supérieure avec un débit d'air d'habitacle F croissant.
